Europäisches Patentamt

European Patent Office

Office européen des brevets

(11) Veröffentlichungsnummer : **0 036 173**
**B1**

(12) **EUROPÄISCHE PATENTSCHRIFT**

(45) Veröffentlichungstag der Patentschrift :
07.11.84

(21) Anmeldenummer : 81101772.2

(22) Anmeldetag : 10.03.81

(51) Int. Cl.³ : **G 02 B  5/04, G 02 B  17/00,**
**G 01 C  3/08, G 02 B  7/11**

(54) Optikmodul für einen optoelektronischen Entfernungsmesser.

(30) Priorität : 12.03.80 DE 3009535

(43) Veröffentlichungstag der Anmeldung :
23.09.81 Patentblatt 81/38

(45) Bekanntmachung des Hinweises auf die Patenterteilung : 07.11.84 Patentblatt 84/45

(84) Benannte Vertragsstaaten :
**BE FR GB IT NL**

(56) Entgegenhaltungen :
**DE-A- 2 302 151**
**DE-A- 2 431 216**
**DE-A- 2 460 805**
**DE-A- 2 842 348**
**DE-A- 2 905 115**
**DE-B- 1 009 821**
**US-A- 4 128 321**

(73) Patentinhaber : **Siemens Aktiengesellschaft**
**Berlin und München Wittelsbacherplatz 2**
**D-8000 München 2 (DE)**

(72) Erfinder : **Grassl, Hans-Peter, Dipl.-Phys.**
**Obere Bahnhofstrasse 12**
**D-8011 Zorneding (DE)**

## Beschreibung

Die Erfindung bezieht sich auf ein Optikmodul für einen optoelektronischen Entfernungsmesser nach dem Oberbegriff des Anspruchs 1.

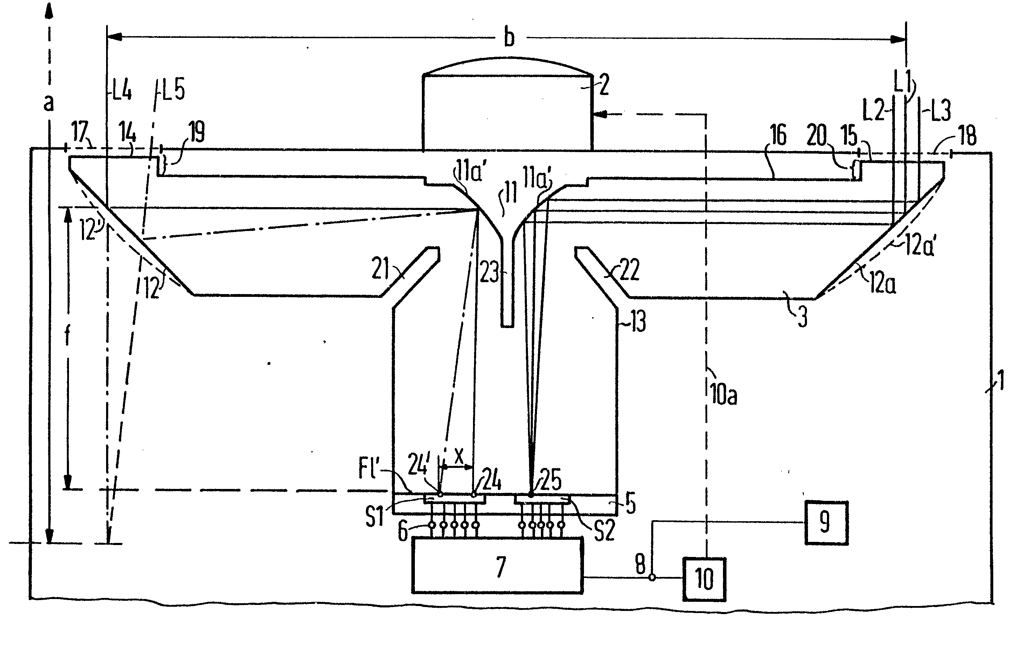

Ein solches Optikmodul ist aus der DE-A-28 42 348, insb. Fig. 2, bekannt. Bei diesem ist der Halbleiterkörper mit ebenen Seitenflächen ausgebildet. Die Fokussierung der von dem Gegenstand ausgehenden Strahlen auf die Ebene der linearen Bildsensoren wird durch zwei optische Systeme bewirkt, die jeweils vor den Eintrittsfenstern angeordnet sind. Beim Einbau in den Entfernungsmesser sind die Bildsensoren gegenüber dem Halbleiterkörper und den optischen Systemen genau zu justieren, was die Herstellung wesentlich erschwert.

Ein anderes Optikmodul wurde bereits in der DE-A 28 13 914 und der DE-A 28 13 913 beschrieben und in den DE-A 29 36 491 DE-A 29 36 535 und DE-A 29 36 521 erwähnt. Dabei handelt es sich bei der DE-A 28 13 914 um einen Entfernungsmesser für eine optische Kamera, der außer einer Anzeige der Entfernung eines Gegenstandes auch eine automatische Fokussierung der Abbildung desselben auf eine Bildebene bewirkt. Wie insbesondere aus Fig. 1 und dem zugehörigen Text der DE-A hervorgeht, enthält dieses Optikmodul vier Umlenkspiegel und zwei Sammellinsen, die auf einer Chassisplatte sorgfältig zu montieren und zu justieren sind, um eine genaue Entfernungsmessung durchführen zu können.

Der Erfindung liegt die Aufgabe zugrunde, ein Optikmodul der eingangs genannten Art anzugeben, das wesentlich einfacher herzustellen und zu montieren ist als die herkömmlichen. Diese Aufgabe wird durch die im Anspruch 1 gekennzeichneten Merkmale gelöst.

Der mit der Erfindung erzielbare Vorteil besteht insbesondere darin, daß das Optikmodul im wesentlichen aus einem einzigen Körper aus transparentem Material besteht und daß sowohl die Funktion der strahlumlenkenden Elemente als auch die der Blenden in sehr einfacher Weise durch eine geeignete Ausbildung der Oberfläche desselben erfüllt werden kann. Darüber hinaus werden gesonderte Fokussierungselemente durch eine besondere Ausbildung einiger Oberflächenteile des transparenten Körpers eingespart. Weiterhin sind die linearen Bildsensoren, die auf einem Halbleiterkörper integriert sind, mit dem transparenten Körper zu einem einzigen Bauteil zusammengefaßt.

Bevorzugte Ausgestaltungen und Weiterbildungen des Optikmoduls nach der Erfindung sind in den Ansprüchen 2 bis 5 gekennzeichnet.

Die Erfindung wird nachfolgend anhand der Zeichnung näher erläutert, in der eine fotografische oder elektronische Kamera mit einem Gehäuse 1 und einer Optik 2 schematisch dargestellt ist. Im Inneren des nur in seinem Umriß angedeuteten Gehäuses 1 sind die wesentlichen Bestandteile eines optoelektronischen Entfernungsmessers gezeigt, der eine Anzeige der Entfernung eines Gegenstandes von der Kamera liefert und insbesondere auch dazu benutzt werden kann, den Abstand der Optik von einer nicht dargestellten Bildebene auf einen solchen Wert einzustellen, daß der Gegenstand hierauf scharf abgebildet wird.

Mit dem Gehäuse 1 ist ein prismatischer Körper 3 aus einem transparenten Material, z. B. aus Polymethacrylat-Harz oder Epoxidharz, verbunden. Auf einem dotierten Halbleiterkörper 5, der mit dem Körper 3 zu einem einzigen Bauteil zusammengefaßt ist, sind lineare Bildsensoren S1, S2 integriert, die unmittelbar an die Fläche Fl' des Körpers 3 angrenzen. Jeder der Bildsensoren S1, S2 enthält eine Reihe von Sensorelementen, die jeweils aus Fotodioden, MIS-Kondensatoren oder aus Fotodioden und diesen zugeordneten MIS-Kondensatoren bestehen. Der Aufbau und die Arbeitsweise solcher Bildsensoren sind beispielsweise in der DE-A 29 36 491 beschrieben. Die mit 6 bezeichneten Ausgänge der einzelnen Sensorelemente sind mit Paralleleingängen einer Auswerteschaltung 7 verbunden, deren Ausgang 8 mit einer die Entfernung eines Gegenstandes anzeigenden Einrichtung 9 beschaltet ist. Andererseits kann der Ausgang 8 auch mit einer Fokussiereinrichtung 10 verbunden sein, die in Abhängigkeit von einem bei 8 abgreifbaren Signal den zur Fokussierung benötigten Abstand der Optik 2 von der Bildebene der Kamera mittels eines durch den Pfeil 10a angedeuteten Betätigungsvorgangs einstellt. Die Auswerteschaltung 7 kann mit Vorteil ebenfalls auf dem dotierten Halbleiterkörper 5 integriert sein.

Neben der in der Zeichnung angedeuteten Ausführung der Bildsensoren S1 und S2, bei der die einzelnen Sensorelemente mit Ausgängen versehen sind, die an die Paralleleingänge der Auswerteschaltung 7 geführt sind, kommt auch die Verwendung von Bildsensoren mit seriellen Ausgängen in Betracht, die zusammen mit einer angepaßten Auswerteschaltung z. B. in der DE-A 28 13 914 beschrieben sind.

Im einzelnen weist der prismatische Körper 3 eine trapezförmige Grundfläche auf, die im mittleren Bereich der längeren der beiden zueinander parallelen Trapezseiten eine V-förmige Ausnehmung 11 aufweist. Die Seitenflächen 11a' der entsprechenden Ausnehmung des Körpers 3, deren spezielle Ausformung weiter unten näher erläutert wird, verlaufen etwa parallel zu den ihnen gegenüberliegenden Flächen 12, 12a des Körpers 3. Die Grundfläche von 3 weist andererseits im mittleren Bereich der kürzeren der beiden zueinander parallelen Trapezseiten einen Ansatz 13 auf. Die endseitigen Bereiche 14, 15 der Seitenfläche 16, die sich hinter Pupillen 17 und 18 des Gehäuses 1 befinden, stellen Eintrittsfenster dar, durch die Lichtstrahlen in das Optikmodul eindringen. Mit Vorteil sind die Bereiche 14, 15 durch kleine Absätze 19, 20 hervorgehoben.

Betrachtet man in Richtung der optischen Achse verlaufende Lichtstrahlen L1 bis L3, die von einem sehr weit entfernten Gegenstand ausgehen, so werden diese an der Fläche 12a um 90° umgelenkt und gelangen zu der rechten Seitenfläche 11a', an der sie wieder um etwa 90° umgelenkt werden. Damit an den Flächen 12a und 11a', sowie an der Fläche 12, eine möglichst totale Reflexion der Lichtstrahlen erfolgt, sind diese Flächen sehr glatt ausgebildet oder verspiegelt. Die doppelt umgelenkten Strahlen L1 bis L3 treffen sich in einem Punkt 25 des Bildsensors S2. Ein Lichtstrahl L4, der von einem sehr weit entfernten Gegenstand ausgeht, gelangt nach einer doppelten Umlenkung an der Fläche 12 und der linken Seitenfläche 11a' in den Punkt 24 des Bildsensors S1.

Nimmt man an, daß sich der Gegenstand in Richtung der Lichtstrahlen L1 bis L3 in einem solchen Abstand von der Kamera befindet, daß der Lichtstrahl L5 anstelle von L4 seine Richtung kennzeichnet, so trifft L5 einen Punkt 24' des Bildsensors S1. Die Strecke x zwischen den Punkten 24 und 24', um die sich das auf die Ebene der Bildsensoren S1 und S2 projizierte Bild des Gegenstandes gegenüber dem Bild des sehr weit entfernten Gegenstandes verschoben hat, stellt ein Maß für die tatsächliche Entfernung des Gegenstandes dar. Bezeichnet man den Abstand der beiden Eintrittsfenster 14 und 15 voneinander als Basis b, den Abstand der Mitte der Seitenflächen 11a' von der Fläche Fl' als f, die vom Schnittpunkt der Lichtstrahlen L4 und L5 an gemessene Entfernung des Gegenstandes mit a und den Brechungsindex des Materials des Körpers 3 mit n, so ergibt sich die Beziehung

$$x = (b \cdot f)/(a \cdot n).$$

An dem zweiten Bildsensor S2 ergibt sich eine andere Verschiebung y der auf ihn projizierten Bildpunkte des Gegenstandes gegenüber den entsprechenden Bildpunkten des sich in sehr großer Entfernung von der Kamera befindenden Gegenstandes, sobald sich der Gegenstand nicht mehr in der Richtung der Lichtstrahlen L1 bis L3 befindet. Hierbei stellt dann die Summe der Verschiebungen x + y ein Maß für die tatsächliche Entfernung des Gegenstandes dar.

Der Wert x + y wird in der Auswerteschaltung 7 in der Weise ermittelt, daß die Sensorsignale des Bildsensors S1 mit den Sensorsignalen des Bildsensors S2 in Abhängigkeit von unterschiedlichen Positionsverschiebungen hinsichtlich ihrer Korrelation überprüft werden. Die Positionsverschiebung, bei der die maximale Korrelation auftritt, entspricht dabei dem gesuchten Wert x + y. Am Ausgang 8 ist dann eine elektrische Größe abgreifbar, die diesem Wert und damit der Entfernung des Gegenstandes entspricht. Die Arbeitsweise einer solchen Auswerteschaltung ist beispielsweise in der DE-A 29 36 491 beschrieben.

Abgesehen von den Bereichen der Eintrittsfenster 14, 15, den Austrittsfenstern, die in der Grenzfläche Fl' liegen, und den Flächen 11a', 12 und 12a sollte die Oberfläche des Körpers 3 möglichst rauh ausgebildet und zweckmäßigerweise geschwärzt sein, um Streu- und Falschlichteinflüsse weitgehend auszuschalten. Einkerbungen 21, 22 und 23 tragen ebenfalls zur Verringerung dieser Einflüsse bei, da sie wie optische Blenden wirken.

Die Seitenflächen 11a' haben eine fokussierende Wirkung, d. h. die Wirkung von Sammellinsen mit Brennebenen, die durch die Punkte 24 und 25 verlaufen. Letztere liegen in der Grenzfläche Fl' des Körpers 3. Die Fokussierung durch die Seitenflächen 11a' wird erreicht, wenn diese als Hohlspiegel ausgebildet werden, z. B. als Ausschnitte der Oberflächen zweier Paraboloide, deren Achsen in der Ebene der Grenzfläche Fl' liegen. Für viele Anwendungsfälle wird es auch genügen, die Seitenflächen 11a' als Ausschnitte zweier Kugelflächen oder als Ausschnitte der Oberflächen zweier Ellipsoide auszubilden, deren große Achsen in der Ebene der Grenzfläche Fl' liegen.

Die fokussierende Wirkung der Flächen 11a' kann verstärkt werden, indem anstelle der planen Flächen 12 und 12a konkave Flächen 12' und 12a' verwendet werden, die ebenfalls als Hohlspiegel, insbesondere als Ausschnitte von Paraboloiden, Ellipsoiden oder Kugelflächen, ausgebildet sind.

Das Optikmodul nach der Erfindung ist nicht nur in Verbindung mit einem in eine fotografische oder elektronische Kamera eingebauten Entfernungsmesser zu verwenden, sondern ganz allgemein als ein wesentlicher Bestandteil eines optoelektronischen Entfernungsmessers aufzufassen, der beispielsweise zur Messung der Position eines zu bearbeitenden Werkstückes in einer Werkzeugmaschine, zur Messung des Abstandes bzw. der Relativgeschwindigkeit zweier Fahrzeuge oder dergleichen eingesetzt wird.

## Ansprüche

1. Optikmodul mit doppelter Strahlenumlenkung für die Projektion zweier Abbildungen eines Gegenstandes auf zwei in einer Bildebene angeordnete lineare Bildsensoren eines optoelektronischen Entfernungsmessers, bei dem ein wenigstens annähernd prismatischer Körper (3) aus transparentem Material vorgesehen ist, der eine annähernd trapezförmige Grundfläche und eine V-förmige Ausnehmung (11) im mittleren Bereich der längeren der beiden zueinander parallelen Trapezseiten aufweist, wobei die Oberflächen (11a') dieser Ausnehmung zu den ihnen gegenüberliegenden Körperflächen (12, 12a) etwa parallel verlaufen, der im Bereich der kürzeren der beiden zueinander parallelen Trapezseiten einen Ansatz (13) aufweist, und der an den Enden der der längeren der beiden zueinander parallelen Trapezseiten zugehörigen Körperfläche (16) zwei Eintrittsfenster (14, 15) und am freien Ende des Ansatzes (13) Austrittsfenster aufweist, dadurch gekennzeichnet, daß sich der Ansatz (13) lediglich über den mittleren Bereich der genannten kürzeren Trapezseite erstreckt, daß die Oberflächen (11a') der Ausnehmung des Körpers (3) jeweils als Hohlspiegel ausgebildet sind und daß die linearen Bildsensoren (S1, S2) auf einem Halbleiterkörper (5) integriert sind, der mit dem Körper (3) so zu einer Baueinheit zusammengefaßt ist, daß seine dem Körper (3) zugewandte Hauptfläche in den Brennebenen (24, 25) der Hohlspiegelflächen (11a') am Ansatz (13) anliegt.

2. Optikmodul nach Anspruch 1, dadurch gekennzeichnet, daß die den Oberflächen (11a') der Ausnehmung gegenüberliegenden Flächen (12', 12a') des Körpers (3) als Hohlspiegel ausgebildet sind.

3. Optikmodul nach einem der Ansprüche 1 oder 2, dadurch gekennzeichnet, daß die Oberfläche des Körpers (3) außerhalb der Eintrittsfenster (14, 15), der Austrittsfenster und der strahlenumlenkenden Oberflächenteile (11a', 12, 2a) rauh ausgebildet und vorzugsweise geschwärzt ist.

4. Optikmodul nach einem der Ansprüche 1 bis 3, dadurch gekennzeichnet, daß die strahlenumlenkenden Oberflächenteile (11a', 12, 12a) des Körpers (3) glatt ausgebildet und vorzugsweise verspiegelt sind.

5. Optikmodul nach einem der vorhergehenden Ansprüche, dadurch gekennzeichnet, daß der Körper (3) in den Bereichen der Ecken, gebildet von den der kürzeren der beiden zueinander parallelen Trapezseiten zugehörigen Körperflächen und dem Ansatz (13), mit Einkerbungen (21, 22) versehen ist.

## Claims

1. An optical module with double beam deflection for the projection of two representations of an object onto two linear image sensors of an opto-electronic distance measuring apparatus arranged in an image plane, wherein in arranged an at least approximately prismatic body (3) of a transparent material which has an approximately trapezoidal base and a V-shaped recess (11) in the central region of the longer of the two mutually parallel trapezoidal sides, where the surfaces (11a') of the recess extend approximately parallel to the body surfaces (12, 12a) which are arranged opposite thereto, which body (3) has an attachment (13) in the region of the shorter of the two mutually trapezoidal sides and has two inlet windows (14, 15) at the ends of the body surface (16) in the longer of the two mutually parallel trapezoidal sides and outlet windows at the free end of the attachment (13), characterised in that the attachment (13) only extends across the central region of said shorter trapezoidal side, that the surfaces (11a') of the recess of the body (3) are respectively designed as a concave mirror, and that the linear image sensors (S1, S2) are integrated on a semiconductor body (5) which together with the body (3) is combined to form a constructional member in such manner that its main surface facing the body (3) abuts upon the attachment (13) in the focal planes (24, 25) of the surfaces (11a') of the concave mirrors.

2. An optical module as claimed in Claim 1, characterised in that the surfaces (12', 12a') of the body (3) which are arranged opposite the surfaces (11a') of the recess, are designed as concave mirrors.

3. An optical module as claimed in one of Claims 1 or 2, characterised in that the surface of the body (3) is rough and preferably blackened apart from the inlet windows (14, 15), the outlet windows and the beam-deflecting surface components (11a', 12, 2a).

4. An optical module as claimed in one of Claims 1 to 3, characterised in that the beam-deflecting surface components (11a', 12, 12a) of the body (3) are smooth and preferably metallized.

5. An optical module as claimed in one of the preceding Claims, characterised in that the body (3) is provided with notches (21, 22) in the regions of the corners formed between the body surfaces of the shorter of the two mutually parallel trapezoidal sides and the attachment (13).

## Revendications

1. Module optique à double déviation du rayonnement pour la projection de deux images d'un objet sur deux détecteurs d'images linéaires disposés dans un plan d'image d'un télémètre optoélectronique, dans lequel il est prévu au moins un corps au moins à peu près prismatique (3) fait en un matériau transparent, présentant une surface de base à peu près trapézoïdale et une encoche (11) de forme en V et ménagée dans la partie médiane de la plus grande des deux côtés du trapèze qui sont parallèles entre eux, les surfaces (11a') de cette encoche qui s'étendent à peu près parallèlement aux surfaces du corps (12, 12a) qui se situent en face de celles-ci, qui présentent dans la partie des plus courts côtés du trapèze qui sont parallèles entre eux, un appendice (13) et qui présentent, aux deux extrémités des surfaces (16) du corps, qui appartiennent aux plus grands des côtés du trapèze qui sont parallèles entre eux, deux fenêtres d'entrée (14, 15) et à l'extrémité libre de l'appendice (13) des fenêtres de sortie, caractérisé par le fait que l'appendice (13) s'étend uniquement sur la partie médiane du côté le plus court, mentionné, du trapèze, que les surfaces (11a') de l'ouverture du corps (3) sont respectivement réalisées sous la forme d'un réflecteur de concentration et que les détecteurs linéaires d'images (S1, S2) sont intégrés sur un corps semiconducteur (5) qui est assemblé avec le corps (3) pour former une unité de construction, que sa surface principale qui est tournée du côté du corps (3) porte, dans les plans focaux (24, 25) des surfaces des réflecteurs de concentration (11a'), contre l'appendice (13).

2. Module optique selon la revendication 1, caractérisé par le fait que les surfaces (12', 12a') du corps (3) qui se situent en face des surfaces (11a') de l'encoche, sont réalisées sour la forme de réflecteurs de concentration.

3. Module optique selon l'une des revendications 1 ou 2, caractérisé par le fait que la surface du corps (3) est réalisée de façon à être rugueuse et de préférence noircie, à l'extérieur des fenêtres d'entrée (14, 15), des fenêtres de sortie et des parties de la surface (11a', 12, 2a) qui devient le rayonnement.

4. Module optique selon l'une des revendications 1 à 3, caractérisé par le fait que les parties de la surface (11a', 12, 12a) du corps (3) qui devient le rayonnement, sont réalisées de façon lisse, et de préférence pourvues d'une surface réfléchissante.

5. Module optique selon l'une des revendications précédentes, caractérisé par le fait que le corps (3) est pourvu d'encoches (21, 22) dans les parties des sommets qui sont formées par les surfaces du corps qui appartiennent aux côtés les plus courts des deux côtés parallèles entre eux du trapèze et l'appendice (13).

0 036 173